Europäisches Patentamt

European Patent Office

Office européen des brevets

(11) Veröffentlichungsnummer : **0 043 138**
**B1**

# EUROPÄISCHE PATENTSCHRIFT

(45) Veröffentlichungstag der Patentschrift :
28.11.84

(51) Int. Cl.³ : **H 02 K 29/02**

(21) Anmeldenummer : **81105072.3**

(22) Anmeldetag : **30.06.81**

(54) **Elektronische Kommutierungseinrichtung für Gleichstrommaschinen mit mehreren Wicklungssträngen.**

(30) Priorität : **02.07.80 DE 3025099**

(43) Veröffentlichungstag der Anmeldung :
**06.01.82 Patentblatt 82/01**

(45) Bekanntmachung des Hinweises auf die Patenterteilung : **28.11.84 Patentblatt 84/48**

(84) Benannte Vertragsstaaten :
**AT CH DE FR GB LI SE**

(56) Entgegenhaltungen :
**DE-A- 2 065 086
DE-B- 1 037 579
GB-A- 1 048 471
US-A- 3 466 519**

(73) Patentinhaber : **Siemens Aktiengesellschaft
Berlin und München Wittelsbacherplatz 2
D-8000 München 2 (DE)**

(72) Erfinder : **Leitgeb, Wilhelm, Dr.
Martin-Luther-Strasse 26
D-8740 Bad Neustadt (DE)**

EP 0 043 138 B1

**Beschreibung**

Die Erfindung betrifft eine elektronische Kommutierungseinrichtung für Gleichstrommaschinen mit mehreren Wicklungssträngen, die aus über ihre Steuerelektrode in den Sperrzustand steuerbaren Halbleiterelementen besteht und bei der die Halbleiterschaltelemente durch von der Lage des Rotors abgeleitete Ein- und Aus-Signale jeweils sprunghaft in den leitenden bzw. sperrenden Zustand geschaltet sind.

Eine solche Kommutierungseinrichtung ist durch die US-PS 35 84 280 bekannt. Diese bekannte Kommutierungseinrichtung weist als Halbleiterschaltelemente Transistoren auf, die jeweils schlagartig in den leitenden oder den sperrenden Zustand gesteuert werden. Beim Kommutieren wird der dem jeweils abzulösenden Wicklungsstrang zugeordnete Transistor gesperrt und gleichzeitig der dem einzuschaltenden Wicklungsstrang zugeordnete Transistor voll durchgesteuert. Durch das schlagartige Sperren des dem abzulösenden Wicklungsstrang zugeordneten Transistors kann eine Selbstinduktionsspannung auftreten, deren Größe die Sperrspannung der Transistoren überschreitet und damit zu einem Durchbruch an den Transistoren führt. Aus diesem Grunde ist bei dem bekannten Gleichstrommotor ein spannungsabhängig wirkender Verbindungskreis zwischen dem Sternpunkt der Wicklungsstränge und dem mit den Transistoren verbundenen Enden der Wicklungsstränge angeschlossen. Durch diesen Verbindungskreis werden die Induktionspannungen auf einen für die Transistoren zulässigen Wert begrenzt.

Der Erfindung liegt die Aufgabe zugrunde, eine elektronische Kommutierungseinrichtung 'zu schaffen, bei der die Zerstörung der steuerbaren Halbleiterschaltelemente durch eine zu hohe Selbstinduktionsspannung ohne zusätzliche Schutzelemente vermieden wird.

Die Lösung der gestellten Aufgabe gelingt nach der Erfindung dadurch, daß das Aus-Signal für das Halbleiterschaltelement des jeweils abzulösenden Wicklungsstranges gegenüber dem Ein-Signal für das Halbleiterschaltelement des jeweils ablösenden Wicklungsstranges verzögert ist, wobei die Verzögerung so bemessen ist, daß der Strom im abzulösenden Wicklungsstrang infolge des durch die Maschinen-EMK hervorgerufenen Ausgleichstrom ganz oder teilweise abgeklungen ist. Das dem abzulösenden Wicklungsstrang zugeordnete Halbleiterschaltelement wird somit praktisch nach Beendigung des natürlichen Kommutierungsvorganges gesperrt, so daß wegen des nicht mehr vorhandenen Stromflusses weder eine Selbstinduktionsspannung noch Schaltverluste auftreten.

Eine nachträgliche Umrüstung von elektronischen Kommutierungseinrichtungen ist dadurch möglich, daß zur Verzögerung des Aus-Signales ein Verzögerungsglied vorgesehen ist, welches durch das Ein-Signal des dem ablösenden Wicklungsstrang zugeordneten Halbleiterschaltelementes gesteuert ist.

Eine Anpassung der Verzögerungszeit infolge von Drehzahländerungen der Gleichstrommaschine erübrigt sich dadurch, daß die Ein- und Aus-Signale von einem Rotorlagegeber erzeugt werden, dessen mit dem Rotor verbundener Geberteil so ausgebildet ist, daß die Einschaltabschnitte einen Winkel aufweisen, der größer als 2 π/p.m ist, wobei p der Polpaarzahl und m der Phasenzahl der Maschine entspricht.

Die Anpassung der Verzögerungszeit gelingt in besonders einfacher Weise dadurch, daß der Rotorlagegeber aus einem leitfähigen Segment besteht, dessen Bogenlänge größer als 2 πr/p.m ist, wobei r dem Segmentradius entspricht.

Anhand eines in der Zeichnung dargestellten Ausführungsbeispiels wird der Anmeldungsgegenstand nachfolgend näher beschrieben. Es zeigt:

Figur 1  das Schaltbild einer elektronischen Kommutierungseinrichtung, bei der die Verzögerung zwischen dem Ein- und Aus-Signal durch gesonderte Verzögerungsglieder erfolgt,

Figur 2  einen Rotorlagegeber mit einem verlängerten Schleifringsegment.

Mit 1 bis 3 sind drei Wicklungsstränge eines kollektorlosen Gleichstrommotors bezeichnet. Diese Wicklungsstränge 1 bis 3 sind an ihrem einen Wicklungsende in Stern geschaltet und mit dem Minuspol einer Gleichspannungsquelle verbunden. Das andere Wicklungsende jedes Wicklungsstranges 1 bis 3 ist jeweils über die Kollektor-Emitter-Strecke eines Transistors 4 bzw. 5 bzw. 6 an den Pluspol der Gleichspannungsquelle schaltbar.

In schematischer Weise ist ein zweipoliger Rotor 7 des Gleichstrommotors dargestellt, mit dem ein Rotorlagegeber 8 gekoppelt ist. Dieser Rotorlagegeber 8 weist ein sich entsprechend den drei Wicklungssträngen über ein Drittel seines Umfanges erstreckendes Segment 9 auf, das aus elektrisch leitfähigem Material besteht und mit dem Minuspol einer Steuerspannungsquelle $U_{st}$ verbunden ist. Am Umfang des Rotorlagegebers 8 sind der Anzahl der Wicklungsstränge entsprechend drei Bürsten 10, 11 und 12 angeordnet. Die Bürsten 10 bis 12 sind mit den Basisanschlüssen der Transistoren 4 bis 6 verbunden. Über das leitfähige Segment 9 und die jeweilige Bürste 10, 11 oder 12 wird der Minuspol der Steuerspannungsquelle $U_{st}$ an die Basis des betreffenden Transistors 4, 5 oder 6 geschaltet und dieser somit voll durchgesteuert.

An jede der Bürsten 10 bis 12 ist außerdem ein Verzögerungsglied 13 bis 15 mit seinem Steuereingang angeschlossen. Der Ausgang der Verzögerungsglieder 13 bis 15 ist jeweils mit der Basis des dem abzulösenden Wicklungsstrang 1, 2 oder 3 zugeordneten Transistors 4, 5 bzw. 6 verbunden. Unter der Annahme, daß die Wicklungsstränge 1 bis 3 in der Reihenfolge 1, 2, 3 angesteuert werden, ist also das mit der Bürste 10 und der Basis des Transistors 4 verbundene Verzögerungsglied 13 mit seinem Ausgang an die Basis des Transistors 6 angeschlossen. Dementsprechend ist das Verzögerungsglied 14 mit der Basis des Transistors 4 und das Verzögerungsglied 15 mit der Basis des Transistors 5 verbunden. Durch Entkopplungsdioden 16 bis 18 wird eine Beeinflussung der Verzögerungsglieder 13 bis 15 durch die Ausgangssignale des jeweils anderen Verzögerungsgliedes verhindert.

Über den Rotorlagegeber 8 werden die einzelnen Transistoren 4 bis 6 jeweils angesteuert und damit die betreffenden Wicklungsstränge 1 bis 3 an die Gleichspannungsquelle geschaltet. Das Ansteuern der Transistoren 4 bis 6 erfolgt hierbei zu einem Zeitpunkt, der gegenüber dem Nulldurchgang der verketteten Maschinen-EMK soweit vorverlegt ist, daß diese noch einen zum Abklingen des Stromes in dem abzulösenden Wicklungsstrang ausreichend großen Ausgleichstrom zu treiben vermag. Entsprechend der Darstellung des Rotorlagegebers 8 wird bei der durch einen Pfeil 19 angedeuteten Drehrichtung gerade über die Bürste 10 die Basis des Transistors 4 an den Minuspol der Steuerspannungsquelle $U_{St}$ gelegt. Der Transistor 4 wird daraufhin voll durchgesteuert und der Wicklungsstrang 1 an die Gleichspannungsquelle geschaltet. Gleichzeitig mit dem Transistor 4 wird auch das Verzögerungsglied 13 angesteuert, welches über seinen Ausgang noch das Steuersignal an dem Transistor 6 für eine bestimmte Zeit aufrechterhält. Der Transistor 6 bleibt somit noch durchgesteuert, bis sein Steuersignal durch das Verzögerungsglied 13 abgeschaltet wird. Entsprechend wird beim Ansteuern des Transistors 5 über das Verzögerungsglied 14 noch das Steuersignal am Transistor 4 und anschließend beim Ansteuern des Transistors 6 über das Verzögerungsglied 15 das Steuersignal an dem Transistor 5 aufrechterhalten.

Die Verzögerungszeit vom Einschalten des dem ablösenden Wicklungsstrang zugeordneten Transistors bis zum Ausschalten des dem abzulösenden Wicklungsstrang zugeordneten Transistors wird entsprechend der Zeit bemessen in der der in dem abzulösenden Wicklungsstrang fließende Strom infolge des des durch die EMK hervorgerufenen Ausgleichstromes möglichst auf den Wert Null abgeklungen ist. Der dem jeweils abzulösenden Wicklungsstrang 1, 2 oder 3 zugeordnete Transistor 4, 5 oder 6 wird somit praktisch im stromlosen Zustand seiner Kollektor-Emitter-Strecke gesperrt. Damit treten an dem betreffenden Transistor keine nennenswerten Schaltverluste und auch keine Selbstinduktionsspannungen mehr auf.

Bei einer Kommutierungseinrichtung mit Transistoren als Schaltelementen ergibt sich das Aus-Signal durch die Abschaltung des Ein-Signals. Die Verzögerung zwischen dem Aus- und Ein-Signal für den abzulösenden und den ablösenden Wicklungsstrang kann bei solchen Kommutierungseinrichtungen durch den Rotorlagegeber selbst bewirkt werden. Hierzu ist es notwendig, daß das vom Rotorlagegeber gelieferte Signal über einen Winkel ansteht, der größer als der Wert $2 \pi/p.m$ ist. Mit p ist hierbei die Polpaarzahl und mit m die Phasenzahl bzw. Anzahl der Wicklungsstränge bezeichnet.

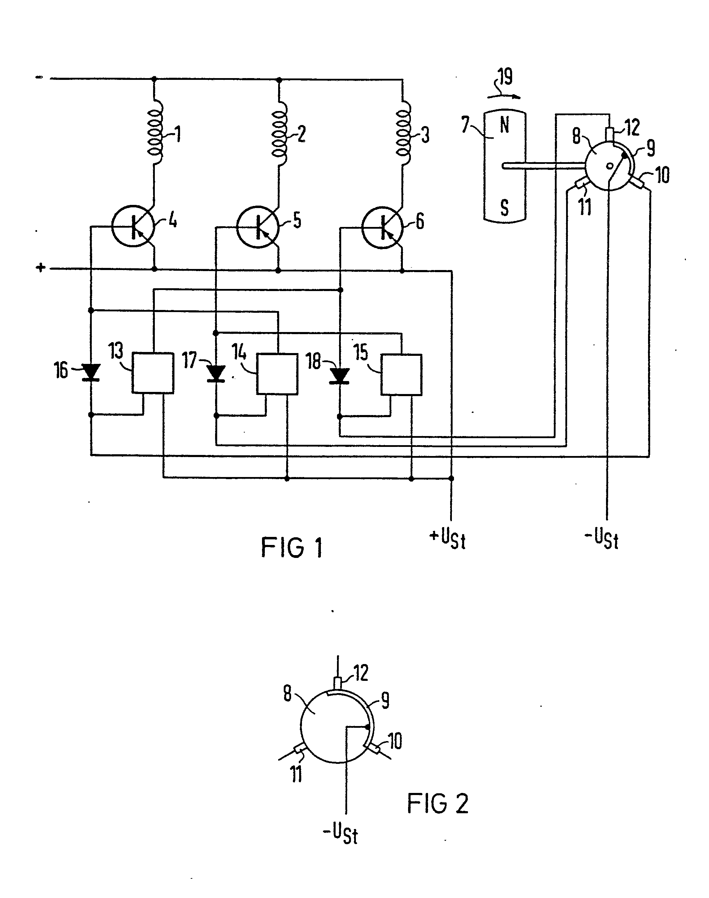

In besonders einfacher Weise läßt sich die gewünschte Verzögerung mit einem in Fig. 2 dargestellten Rotorlagegeber 8 erreichen. Bei diesem Rotorlagegeber 8 ist im Gegensatz zu dem in Fig. 1 dargestellten Rotorlagegeber 8 die Bogenlänge des leitfähigen Segmentes 9 größer als $2 \pi r/p.m$. Damit sind während des Kommutierungsvorganges für eine bestimmte, der jeweiligen Drehzahl umgekehrt proportionale Zeit zwei Bürsten gleichzeitig mit dem Minuspol der Steuerspannungsquelle verbunden. Damit sind auch die mit ihrer Basis an die betreffenden Bürsten angeschlossenen Transistoren gleichzeitig durchgesteuert.

Entsprechend der Darstellung in Fig. 2 ist das leitfähige Segment 9 gerade unter die Bürste 10 gelangt. Infolgedessen ist der dem Wicklungsstrang 1 zugeordnete Transistor 4 gerade durchgesteuert worden. Da die Bogenlänge des Segmentes 9 größer als $2 \pi r/p.m$ ist, ragt das Segment auch noch unter die Bürste 12, so daß der mit seiner Basis mit der Bürste 12 verbundene Transistor 6 noch durchgesteuert bleibt, bis das Segment 9 die Bürste 12 nicht mehr berührt. Die Verlängerung des Segmentes 9 wird so gewählt, daß der in dem abzulösenden Wicklungsstrang 3 fließende Strom infolge des von der EMK getriebenen Ausgleichstromes möglichst auf den Wert Null abgeklungen ist. Wird dann das Steuersignal von der Basis des Transistors 6 weggenommen, sperrt dieser Transistor im stromlosen oder nahezu stromlosen Zustand.

## Ansprüche

1. Elektronische Kommutierungseinrichtung für Gleichstrommaschinen mit mehreren Wicklungssträngen, die aus über ihre Steuerelektrode in den Sperrzustand steuerbaren Halbleiterschaltelementen besteht und bei der die Halbleiterschaltelemente durch von der Lage des Rotors abgeleitete Ein- und Aus-Signale jeweils sprunghaft in den leitenden bzw. sperrenden Zustand geschaltet sind, dadurch gekennzeichnet, daß das Aus-Signal für das Halbleiterschaltelement (4 bis 6) des jeweils abzulösenden Wicklungsstranges (1 bis 3) gegenüber dem Ein-Signal für das Halbleiterschaltelement (4 bis 6) des jeweils ablösenden Wicklungsstranges (1 bis 3) verzögert ist, wobei die Verzögerung so bemessen ist, daß der Strom im abzulösenden Wicklungsstrang infolge des durch die Maschinen-EMK hervorgerufenen Ausgleichstromes ganz oder teilweise abgeklungen ist.

2. Kommutierungseinrichtung nach Anspruch 1, dadurch gekennzeichnet, daß zur Verzögerung des Aus-Signales ein Verzögerungsglied (13 bis 15) vorgesehen ist, welches durch das Ein-Signal des dem ablösenden Wicklungsstrang (1 bis 3) zugeordneten Halbleiterschaltelementes (4 bis 6) gesteuert ist.

3. Kommutierungseinrichtung nach Anspruch 1, dadurch gekennzeichnet, daß die Ein- und Aus-Signale von einem Rotorlagegeber (8) erzeugt werden, dessen mit dem Rotor verbundener Geberteil so ausgebildet ist, daß die Einschaltabschnitte einen Winkel aufweisen, der größer als 2 $\pi$/p.m ist, wobei p der Polpaarzahl und M der Phasenzahl der Maschine entspricht.

4. Kommutierungseinrichtung nach Anspruch 3, dadurch gekennzeichnet, daß der Rotorlagegeber (8) aus einem leitfähigen Segment (9) besteht, dessen Bogenlänge größer als 2 $\mu$r/p.m ist, wobei r dem Segmentradius entspricht.

## Claims

1. An electronic commutating device for direct current machines with a plurality of phase-windings having semiconductor switching elements which can be controlled into the blocking state via their control electrodes, and wherein each of the semiconductor switching elements is suddenly switched over to the conducting or blocking state, as the case may be, by « on » and « off » signals derived from the position of the rotor, characterised in that the « off » signal for the respective semiconductor switching element (4 to 6) of the phase-winding (1 to 3) which is to be disconnected is delayed compared with the « on » signal for the respective semiconductor switching element (4 to 6) of the superseding phase-winding (1 to 3) the delay being so calculated that the current in the phase-winding to be disconnected is completely or partially damped as a result of the equalizing current caused by the machine EMF.

2. A commutating device as claimed in Claim 1, characterised in that a delay element (13 to 15) is provided to delay the « off » signal, which is controlled by the « on » signal of the semiconductor switching element (4 to 6) assigned to the superseding phase-winding (1 to 3).

3. A commutating device as claimed in Claim 1, characterised in that the « on » and « off » signals are produced by a rotor position indicator (8), whose indicator component is connected to the rotor such that the switch-on sections have an angle larger than 2 $\pi$/p.m, where p is the number of pole pairs and m the number of machine phases.

4. A commutating device as claimed in Claim 3, characterised in that the rotor position indicator (8) consists of a conducting segment (9), whose arc length is greater than 2 $\pi$r/p.m, where r is the segment radius.

## Revendications

1. Dispositif de commutation électronique pour des machines à courant continu comportant plusieurs faisceaux d'enroulement, et qui est constitué par des éléments de commutation à semiconducteurs pouvant être placés à l'état bloqué par l'intermédiaire de leurs électrodes de commande et dans lequel les éléments de commutation à semiconducteurs sont placés respectivement brusquement dans l'état conducteur ou dans l'état bloqué par des signaux de branchement et de débranchement dérivés de la position du rotor, caractérisé par le fait que le signal de débranchement pour l'élément de commutation à semiconducteurs (4 à 6) du faisceau d'enroulement (1 à 3) devant être respectivement déconnecté est retardé par rapport au signal de branchement pour l'élément de commutation à semiconducteurs (4 à 6) du faisceau d'enroulement (1 à 3) se déconnectant, le retard étant dimensionné de telle sorte que le courant circulant dans le faisceau d'enroulement devant être déconnecté est enroulé ou réduit sous l'action du courant de compensation produit par la force électromotrice de la machine.

2. Dispositif de commutation suivant la revendication 1, caractérisé par le fait que pour retarder le signal de débranchement il est prévu une ligne à retard (13 à 15) qui est commandée par le signal de branchement de l'élément de commutation à semiconducteurs (4 à 6) associé au faisceau d'enroulement (1 à 3) se déconnectant.

3. Dispositif de commutation suivant la revendication 1, caractérisé par le fait que les signaux de branchement et de débranchement sont produits par un générateur (8) de la position du rotor, dont la partie capteur reliée au rotor est agencée de telle sorte que les sections de branchement s'étendent sur un angle qui est supérieur à 2 $\pi$/p.m, p représentant le nombre de couples de pôles, et M le nombre de phases de la machine.

4. Dispositif de commutation suivant la revendication 3, caractérisé par le fait que le générateur (8) de la position du rotor est constitué par un segment conducteur (9) dont la longueur de l'arc est supérieure à 2 $\pi$r/p.m, r étant le rayon du segment.

FIG 1

$+U_{St}$    $-U_{St}$

$-U_{St}$

FIG 2